# FASCICULE DE BREVET EUROPEEN

(11) **EP 2 715 846 B1**
(45) Date de publication et mention de la délivrance du brevet: **11.02.2015**
(21) Numéro de dépôt: 12726045.3
(22) Date de dépôt: 25.05.2012
(51) Int. Cl.: H01M 8/02, H01M 8/10, H01M 8/24

(54) **PILE À COMBUSTIBLE LIMITANT LE PHÉNOMÈNE DE CORROSION**
BRENNSTOFFZELLE MIT LIMITIERTER KORROSION
FUEL CELL LIMITING THE PHENOMENON OF CORROSION

(30) Priorité: 30.05.2011 FR 1154714
(43) Date de publication de la demande: 09.04.2014
(73) Titulaire: Commissariat à l'Énergie Atomique et aux Énergies Alternatives, 75015 Paris (FR)
(72) Inventeur: VINCENT, Rémi, F-38100 Grenoble (FR); POIROT-CROUVEZIER, Jean-Philippe, F-38450 Saint Georges de Commiers (FR); SCHOTT, Pascal, F-38250 Villard de Lans (FR)
(74) Mandataire: GIE Innovation Competence Group
(86) Numéro de dépôt international: PCT/EP2012/059864
(87) Numéro de publication internationale: WO 2012/163842

(56) Documents cités:
- US-A1- 2006 046 130
- US-A1- 2008 206 617
- US-A1- 2008 292 916
- US-A1- 2009 092 872

## Description

L'invention concerne les piles à combustible, et en particulier les piles à combustible à membrane d'échange de protons.

Les piles à combustible sont notamment envisagées comme source d'énergie pour des véhicules automobiles produits à grande échelle dans le futur. Une pile à combustible est un dispositif électrochimique qui convertit de l'énergie chimique directement en énergie électrique. Une pile à combustible comprend un empilement en série de plusieurs cellules. Chaque cellule génère une tension de l'ordre de 1 Volt, et leur empilement permet de générer une tension d'alimentation d'un niveau plus élevé, par exemple de l'ordre d'une centaine de volts.

Parmi les types de piles à combustible connus, on peut notamment citer la pile à combustible à membrane d'échange de protons, dite PEM. De telles piles à combustible présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, du dihydrogène utilisé comme carburant est ionisé pour produire des protons traversant la membrane. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques d'écoulement, par exemple en métal, empilées les unes sur les autres. La membrane est disposée entre deux plaques d'écoulement. Les plaques d'écoulement peuvent comprendre des canaux et orifices pour guider les réactifs et les produits vers/depuis la membrane. Les plaques sont également électriquement conductrices pour former des collecteurs des électrons générés au niveau de l'anode. Des couches de diffusion gazeuse (pour Gaz Diffusion Layer en langue anglaise) sont interposées entre les électrodes et les plaques d'écoulement et sont en contact avec les plaques d'écoulement.

Les plaques d'écoulement sont en contact avec des solutions très acides. Du côté de la cathode, la plaque est soumise à de l'air sous pression dans un environnement hautement oxydant. Du côté de l'anode, la plaque est en contact avec de l'hydrogène. Dans de telles conditions, les plaques métalliques subissent des phénomènes de corrosion. La corrosion d'une plaque entraîne d'une part l'émission d'ions métalliques venant altérer le fonctionnement de la membrane électrolytique. La corrosion de la plaque entraîne d'autre part la formation d'une couche d'oxyde isolante sur le métal, ce qui augmente sa résistance de contact avec la couche de diffusion gazeuse. La résistance électrique entre la plaque d'écoulement et la couche de diffusion gazeuse est alors accrue. Ces phénomènes induisent une réduction des performances de la pile à combustible. Les plaques d'écoulement doivent donc présenter une conductivité électrique élevée tout en évitant des phénomènes d'oxydation et de corrosion.

Le développement industriel des piles à combustible implique une importante baisse des coûts de fabrication des différents composants. En particulier, les plaques d'écoulement présentent encore un coût rédhibitoire pour une utilisation à grande échelle.

Pour réduire le coût des plaques d'écoulement, celles-ci sont généralement formées sous forme de plaque bipolaire incluant deux plaques d'écoulement. Une solution éprouvée industriellement consiste à emboutir deux feuilles métalliques en acier inoxydable et à les assembler dos à dos par soudage laser pour former des plaques d'écoulement pour des cellules adjacentes. Les soudures sont réalisées dans le fond de canaux, les fonds des canaux des deux feuilles métalliques dos à dos étant placés en contact. Afin de réduire les coûts de fabrication, les feuilles métalliques dos à dos ont une même géométrie.

Le document US2006046130 A1 décrit une pile à combustible destinée à limiter l'influence des variations de forces de compression sur un empilement de cellules. Les plaques bipolaires sont formées par assemblage de deux feuilles métalliques. Chaque feuille métallique présente un relief pour former des canaux d'écoulement de gaz. Une multitude de canaux adjacents s'étend selon une même direction. Deux feuilles métalliques sont assemblées en plaçant en contact le fond de certains canaux de ces feuilles, puis en réalisant des soudures dans ces fonds. Pour permettre d'absorber les variations de forces de compression, des espaces sont ménagés entre les fonds de certains canaux de deux feuilles métalliques assemblées. Pour homogénéiser l'absorption des variations de compression selon la direction transversale aux canaux, les espaces des plaques bipolaires successives sont décalés.

En pratique, les piles à combustible connues présentent un fonctionnement relativement hétérogène au niveau de l'assemblage membranes/électrodes. Cette hétérogénéité s'explique notamment par l'évolution de l'humidité des gaz entre l'entrée et la sortie de l'assemblage membranes/électrodes. Cette hétérogénéité induit une augmentation locale de la densité de courant, favorisant la corrosion localisée du carbone.

L'invention vise à résoudre un ou plusieurs de ces inconvénients. L'invention vise notamment à obtenir une pile à combustible d'un coût réduit et favorisant une homogénéité de la densité de courant à travers les assemblages membranes/électrodes. L'invention porte ainsi sur une pile à combustible, telle que définie dans les revendications annexée.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple de pile à combustible selon un mode de réalisation de l'invention ;
- la figure 2 est une vue en coupe de la pile à combustible de la figure 1 ;
- la figure 3 est une représentation schématique de la disposition des soudures pour deux plaques bipolaires superposées ;
- la figure 4 est un diagramme comparatif de la densité de courant dans une membrane avec une pile à combustible selon l'invention et une pile à combustible selon l'état de la technique ;
- la figure 5 est une représentation schématique de la disposition des soudures pour trois plaques bipolaires superposées.

Les inventeurs ont mis en évidence que la conductivité locale d'une plaque bipolaire avait aussi une influence sur l'hétérogénéité du fonctionnement de l'assemblage membranes/électrodes. En particulier, les inventeurs ont constaté que les soudures entre deux feuilles métalliques dos à dos et leur positionnement influençaient considérablement cette hétérogénéité.

L'invention propose une pile à combustible comprenant trois assemblages membrane/électrodes adjacents, séparés par des première et deuxième plaques bipolaires métalliques. Les plaques bipolaires comportent deux feuilles métalliques en vis-à-vis solidarisées par des soudures.

Au moins une partie des soudures de la première plaque bipolaire n'est pas superposée aux soudures de la deuxième plaque bipolaire, ces soudures de la première plaque bipolaire sont en décalé longitudinalement et transversalement par rapport aux soudures de la deuxième plaque bipolaire.

L'invention force les courants traversant les plaques bipolaires et les assemblages membrane/électrodes d'emprunter des trajets sinueux. L'invention permet d'optimiser de façon significative l'homogénéité de la densité de courant à travers la membrane échangeuse de protons (et donc d'améliorer la résistance à la corrosion et la longévité de la pile à combustible), sans nécessiter une augmentation de la densité de soudures et donc sans surcoût industriel. L'invention va à l'encontre de la démarche usuelle de l'homme du métier de standardiser au maximum les plaques bipolaires en utilisant systématiquement des soudures localisées au même endroit. De plus, l'homme du métier n'est pas incité à espacer les soudures, la connexion en série des cellules par l'intermédiaire des plaques bipolaires induisant normalement une recherche d'une résistance électrique minimale et donc d'un trajet électrique le plus court.

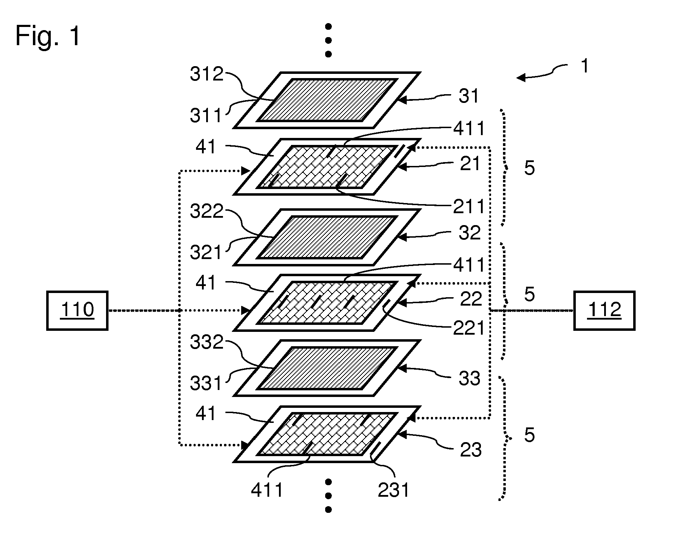

La figure 1 est une vue en perspective éclatée schématique d'une partie d'une pile à combustible 1 selon un mode de réalisation de l'invention. La pile à combustible 1 est du type à membrane échangeuse de protons ou membrane à électrolyte polymère. La pile à combustible 1 comprend plusieurs cellules 5 superposées. La pile à combustible 1 comprend une source de carburant 110 alimentant en dihydrogène une entrée de chaque cellule 5. La pile à combustible 1 comprend également une source d'air 112 alimentant une entrée de chaque cellule en air, contenant de l'oxygène utilisé comme oxydant. Chaque cellule 5 comprend également des canaux d'échappement non illustrés. Chaque cellule 5 peut également présenter un circuit de refroidissement non illustré.

Chaque cellule 5 comprend un assemblage membrane/électrodes. La pile à combustible 1 illustrée comprend notamment des assemblages membrane/électrodes ou AME 31, 32 et 33. Chaque assemblage membrane/électrodes comprend une couche d'électrolyte formée par exemple d'une membrane polymère (respectivement 311, 321 et 331 pour les assemblages 31, 32 et 33).

Un assemblage membrane/électrodes comprend également une cathode (non illustrée à la figure 1) et une anode (respectivement 312, 322 et 332 pour les assemblages 31, 32 et 33) placées de part et d'autre de l'électrolyte et fixées sur cet électrolyte.

La couche d'électrolyte forme une membrane semi-perméable permettant une conduction protonique tout en étant imperméable aux gaz présents dans la cellule. La couche d'électrolyte empêche également un passage des électrons entre l'anode et la cathode.

Chaque cellule 5 présente des plaques de guidage d'écoulement disposées en vis-à-vis respectivement de l'anode et de la cathode. Chaque cellule 5 présente de plus une couche de diffusion de gaz (non illustrée) disposée entre l'anode et la plaque de guidage. Chaque cellule 5 présente par ailleurs une couche de diffusion de gaz (non illustrée) disposée entre la cathode et la plaque de guidage.

Entre chaque couple d'AME adjacents, un couple de guides d'écoulement est disposé. Les guides d'écoulement de chaque couple sont solidaires pour former une plaque bipolaire. Ainsi, la pile à combustible 1 comporte une plaque bipolaire 21 (disposée entre les AME 31 et 32), une plaque bipolaire 22 (disposée entre les AME 32 et 33) et une plaque bipolaire 23. Chaque guide d'écoulement est formé d'une feuille métallique. La plaque bipolaire 21 comprend ainsi une feuille métallique 41 orientée vers la cathode de l'AME 31 et une feuille métallique 42 orientée vers l'anode de l'AME 32. La feuille métallique 41 comporte une surface en relief 411 définissant des canaux d'écoulement 412. La feuille métallique 42 comporte une surface en relief définissant des canaux d'écoulement 422. Les feuilles métalliques 41 et 42 sont solidarisées par les soudures 211, 221 et 231 respectivement pour les plaques bipolaires 21,22 et 23. Pour des raisons de lisibilité, seul un nombre réduit de soudures est illustré, ces soudures étant illustrées très schématiquement.

De façon connue en soi, durant le fonctionnement de la pile à combustible 1, de l'air s'écoule entre les AME et les feuilles métalliques 41, et du dihydrogène s'écoule entre les AME et les feuilles métalliques 42. Au niveau des anodes, le dihydrogène est ionisé pour produire des protons qui traversent les AME. Les électrons produits par cette réaction sont collectés par une plaque 41. Les électrons produits sont ensuite appliqués sur une charge électrique connectée à la pile à combustible 1 pour former un courant électrique. Au niveau des cathodes, de l'oxygène est réduit et réagit avec les protons pour former de l'eau. Les réactions au niveau de l'anode et de la cathode sont régies comme suit :

H₂ → 2H⁺ + 2e⁻ au niveau de l'anode ;

4H⁺ 4e⁻ + O₂ → 2H₂O au niveau de la cathode.

Durant son fonctionnement, une cellule de la pile à combustible génère usuellement une tension continue entre l'anode et la cathode de l'ordre de 1 V.

Selon l'invention, au moins une partie des soudures de deux plaques bipolaires adjacentes ne sont pas superposées. Avantageusement, au moins 50% de la surface des soudures de deux plaques adjacentes ne sont pas superposées. Ainsi, les soudures 211 de la plaque bipolaire 21 ne sont pas du tout superposées aux soudures 221 de la plaque bipolaire 22. De même, les soudures 231 de la plaque bipolaire 23 ne sont pas du tout superposées aux soudures 221 de la plaque bipolaire 22. Les soudures de deux plaques bipolaires adjacentes sont décalées à la fois longitudinalement et transversalement, comme détaillé par la suite. Ainsi, le courant protonique à travers les AME n'est pas uniquement perpendiculaire aux AME, ce qui permet d'homogénéiser la densité de courant protonique sur la surface de l'AME.

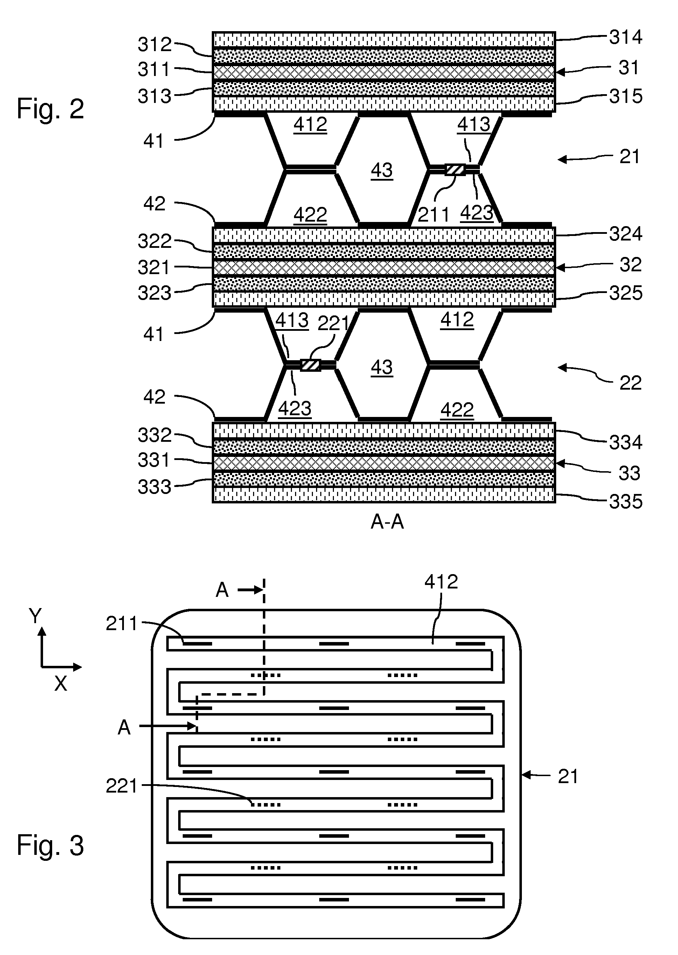

La figure 2 est une vue en coupe schématique d'une variante de pile à combustible 1. L'AME 31 comporte des couches de diffusion de gaz 314 et 315 disposées respectivement sur l'anode 312 et sur la cathode 313. L'AME 32 comporte des couches de diffusion de gaz 324 et 325 disposées respectivement sur l'anode 322 et sur la cathode 323. L'AME 33 comporte des couches de diffusion de gaz 334 et 335 disposées respectivement sur l'anode 332 et sur la cathode 333. Les couches de diffusion de gaz 314, 324 et 334 servent à diffuser du dihydrogène vers leur anode respective. Les couches de diffusion de gaz 315, 325 et 335 servent à diffuser du dioxygène vers leur cathode respective. Les couches de diffusion de gaz peuvent par exemple être réalisées de façon connue en soi sous forme de fibre, de feutre ou de tissu de graphite sur lequel est fixé un agent hydrophobe tel que du polytétrafluoroéthylène. La couche de diffusion de gaz 315 est en contact avec la feuille métallique 41 de la plaque bipolaire 21. La couche de diffusion de gaz 324 est en contact avec la feuille métallique 42 de la plaque bipolaire 21. La couche de diffusion de gaz 325 est en contact avec la feuille métallique 41 de la plaque bipolaire 22. La couche de diffusion de gaz 334 est en contact avec la feuille métallique 42 de la plaque bipolaire 22.

Les feuilles métalliques 41 présentent un relief dans lequel sont formés des canaux d'écoulement 412 successifs, s'étendant selon une direction longitudinale. Les canaux d'écoulement 412 sont répartis selon une direction transversale. Les feuilles métalliques 42 présentent un relief dans lequel sont formés des canaux d'écoulement 422 successifs, s'étendant selon une direction longitudinale. Les canaux d'écoulement 422 sont répartis selon une direction transversale. Les canaux d'écoulement 412 et 422 sont superposés. Les feuilles métalliques 41 et 42 ainsi accolées définissent entre elles un circuit d'écoulement 43 pour du liquide de refroidissement. Les canaux d'écoulement 412 sont délimités par des fonds 413. De façon similaire, les canaux d'écoulement 422 sont délimités par des fonds 423. Les fonds 413 et 423 sont disposés en contact. Pour des raisons d'intelligibilité, la figure 2 est une vue en coupe brisée à plans parallèles, permettant d'illustrer des soudures présentes à différents niveaux longitudinaux. Dans la plaque bipolaire 21, les soudures 211 sont ménagées localement dans les fonds 413 et 414 des canaux d'écoulement. Dans la plaque bipolaire 22, les soudures 221 sont ménagées localement dans les fonds 413 et 414 des canaux d'écoulement. Dans un souci de simplification les entrées et sorties ménagées dans les feuilles métalliques 41 et 42 pour communiquer avec les canaux d'écoulement 412 et 422 ne sont pas illustrées.

La figure 3 illustre les positions respectives des soudures 211 et 221 de la pile à combustible 1 la figure 2, en projection sur un plan selon une direction perpendiculaire aux plaques bipolaires. La direction X correspond à la direction longitudinale, soit la direction d'extension des canaux d'écoulement 412 et 422. La direction Y correspond à la direction transversale, soit la direction de répartition des canaux d'écoulement 412 et 422. Les soudures en trait plein correspondent aux soudures 211 de la plaque bipolaire 21. Les soudures en trait discontinu correspondent aux soudures 221 de la plaque bipolaire 22, vues par transparence. Comme illustré à la figure 3, les soudures 211 et 221 des plaques bipolaires 21 et 22 ne sont pas du tout superposées. Les soudures 211 et 221 sont décalées les unes par rapport aux autres longitudinalement et transversalement. Les soudures 211 et 221 sont réparties sur ledit plan de projection. Les soudures 211 et 221 sont décalées à la fois longitudinalement et transversalement, afin de rendre le trajet du courant électrique le plus sinueux possible et donc optimiser son homogénéisation. Avantageusement, les soudures d'une plaque bipolaire sont disposées au barycentre des soudures les plus proches appartenant à la plaque bipolaire adjacente. Ainsi, dans l'exemple, chaque soudure 221 est disposée au barycentre de quatre soudures 211.

La géométrie 412 illustrée est schématique. En présence d'une multitude de plaques bipolaires, deux plaques bipolaires entre lesquelles une autre plaque bipolaire est intercalée peuvent présenter une même disposition des soudures. Dans l'exemple, les soudures 211 et les soudures 231 présentent une même localisation.

De telles soudures 211 sont typiquement réalisées par laser, procédé largement répandu notamment dans le domaine de la construction automobile.

Avantageusement, les projections des soudures de plaques bipolaires adjacentes sur un même plan, selon une direction perpendiculaire à ces plaques, sont distantes d'au moins 5 mm, de préférence d'au moins 10 mm, et avantageusement distantes de moins de 50 mm. Pour optimiser la répartition des soudures sur une même plaque bipolaire, les soudures de cette plaque seront avantageusement distantes d'au moins 10mm, de préférence d'au moins 20mm, et avantageusement distantes de moins de 100mm.

La densité des soudures est essentiellement définie par la résistance mécanique de la liaison entre les feuilles 41 et 42 d'une plaque bipolaire. Cette densité de soudures est avantageusement comprise entre 0,1 et 1 soudures par cm². La densité de soudure peut également être définie par un rapport entre la surface de soudure et la section de la plaque bipolaire. Les soudures réalisées peuvent être ponctuelles, rectilignes ou curvilignes avec des croisements. Les soudures réalisées sur une plaque bipolaire sont avantageusement réparties sur celle-ci pour favoriser l'homogénéisation de la densité de courant. Les soudures peuvent également être disposées sur une plaque bipolaire en fonction de la répartition de température dans celle-ci durant le fonctionnement. La position des soudures pourra être adaptée de façon spécifique à une plaque bipolaire en fonction de sa conception, de la forme de ses canaux d'écoulement et en fonction du nombre d'AME dans la pile à combustible 1.

Les feuilles métalliques 41 et 42 sont avantageusement réalisées en acier inoxydable, matériau très courant et adapté à de nombreux procédés de transformation industriels largement répandus. Le relief des feuilles métalliques 41 et 42, notamment les canaux d'écoulements 412 et 422, est par exemple généré par emboutissage ou estampage de feuilles métalliques plates. Les feuilles métalliques des différentes plaques bipolaires peuvent être identiques, afin d'accroître l'effet d'échelle dans les composants destinés à la fabrication de la pile à combustible 1.

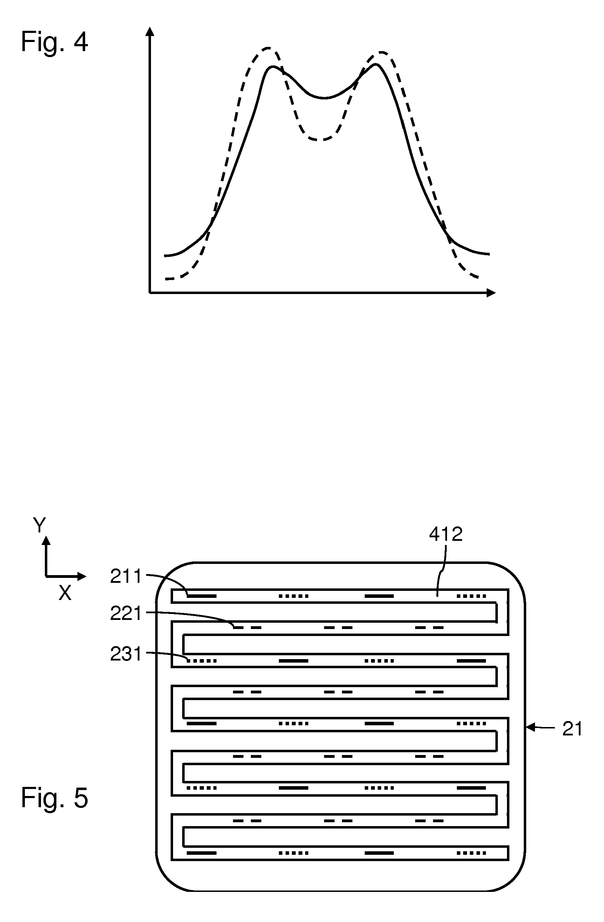

La figure 4 est un diagramme comparatif obtenu par simulation. Le diagramme compare la densité de courant protonique à travers l'AME, en fonction de la position selon un axe. La ligne en trait discontinu correspond à la densité de courant selon l'état de la technique, la ligne en trait plein correspond à la densité de courant avec des soudures disposées selon l'invention. On constate une amélioration significative de l'homogénéité de la densité de courant avec des soudures disposées selon l'invention.

La figure 5 est une vue en coupe schématique de la pile à combustible 1 de la figure 1. Les canaux d'écoulement des différentes feuilles métalliques des plaques bipolaires 21, 22 et 23 sont superposés et s'étendent selon une direction longitudinale. Seul le canal d'écoulement 412 et la plaque bipolaire 21 sont ici illustrés. La figure 5 illustre la position en projection sur cette plaque bipolaire 21 des soudures des différentes feuilles métalliques des plaques bipolaires 21, 22 et 23. Des soudures de la plaque bipolaire 21 sont illustrées en trait continu, les soudures de la plaque bipolaire 22 sont illustrées en trait discontinu et les soudures de la plaque bipolaire 23 sont illustrées en pointillés. Comme dans la variante illustrée précédemment, les soudures de deux plaques bipolaires adjacentes sont décalées longitudinalement et transversalement.

Afin de rendre le parcours du courant électrique le plus sinueux possible entre les plaques bipolaires 21, 22 et 23, les soudures de ces différentes plaques ne sont pas superposées, et les soudures de deux plaques distinctes sont décalées longitudinalement et transversalement. Pour rendre le parcours particulièrement sinueux, on place une soudure 221 de la plaque 22 (disposée entre les plaques 21 et 23) au barycentre des quatre soudures les plus proches appartenant soit à la plaque bipolaire 21, soit à la plaque bipolaire 23. Ainsi, les soudures 221 sont ici disposées au barycentre entre deux soudures 211 et deux soudures 231, les quatre soudures les plus proches d'une soudure 221 étant répartis entre les plaques bipolaires 21 et 23.

## Revendications

1. Pile à combustible (1), comprenant :
- au moins trois assemblages membrane/électrodes (31, 32, 33) ;
- au moins des première et deuxième plaques bipolaires métalliques (21, 22) interposées entre lesdits assemblages membrane/électrodes, chacune de ces plaques bipolaires comprenant deux feuilles métalliques (41, 42) en vis-à-vis d'un assemblage membrane/électrodes respectif et solidarisées par des soudures (211, 221, 231), lesdites deux feuilles métalliques comportant des canaux de guidage (412, 422) de gaz successifs s'étendant selon une même direction longitudinale, les canaux de guidage étant répartis selon une direction transversale, et les soudures étant ménagées dans le fond (413, 423) des canaux de guidage ;
**caractérisée en ce qu'**au moins une partie desdites soudures (211) de la première plaque bipolaire n'est pas superposée aux soudures de la deuxième plaque bipolaire et est décalée longitudinalement et transversalement par rapport aux soudures (221) de la deuxième plaque bipolaire.

2. Pile à combustible selon la revendication 1, dans laquelle les soudures (211) de la première plaque bipolaire ne sont pas du tout superposées aux soudures (221) de la deuxième plaque bipolaire.

3. Pile à combustible selon la revendication 1 ou 2, **caractérisée en ce que** les projections des soudures des première et deuxième plaques bipolaires sur un même plan selon une direction perpendiculaire à ces plaques sont distantes d'au moins 5mm, de préférence d'au moins 10mm, avantageusement distantes de moins de 50mm.

4. Pile à combustible selon l'une quelconque des revendications précédentes, dans laquelle lesdites soudures de la première plaque bipolaire sont disposées chacune à l'aplomb du barycentre des soudures de la deuxième plaque bipolaire les plus proches.

5. Pile à combustible selon l'une quelconque des revendications 1 à 3, comprenant en outre une troisième plaque bipolaire (23), la deuxième plaque bipolaire (22) étant disposée entre les première (21) et troisième plaques bipolaires, la troisième plaque bipolaire comprenant deux feuilles métalliques solidarisées par des soudures (231), lesdites deux feuilles métalliques comportant des canaux de guidage de gaz successifs (412, 422) s'étendant selon une même direction longitudinale, les canaux de guidage étant répartis selon une direction transversale, et les soudures (231) étant ménagées dans le fond des canaux de guidage, au moins une partie des soudures de la troisième plaque bipolaire étant décalée longitudinalement et transversalement par rapport aux soudures des première et deuxième plaques bipolaires, lesdites soudures de la deuxième plaque bipolaire étant disposées chacune à l'aplomb du barycentre des quatre soudures les plus proches appartenant aux première ou troisième plaques bipolaires.

6. Pile à combustible selon l'une quelconque des revendications précédentes, dans laquelle la densité de soudures des première et deuxième plaques bipolaires est comprise entre 0,1 et 1 soudures par cm².

7. Pile à combustible selon l'une quelconque des revendications précédentes, dans laquelle les soudures des plaques bipolaires sont réparties de façon homogène sur lesdites plaques bipolaires.

8. Pile à combustible selon l'une quelconque des revendications précédentes, dans laquelle lesdites feuilles métalliques (41, 42) sont formées d'acier inoxydable.

9. Pile à combustible selon l'une quelconque des revendications précédentes, dans laquelle lesdites feuilles métalliques (41, 42) délimitent un circuit d'écoulement (43) d'un liquide de refroidissement.

10. Pile à combustible selon l'une quelconque des revendications précédentes, dans laquelle lesdites soudures sont ponctuelles ou linéaires.

## Patentansprüche

1. Brennstoffzelle (1), umfassend:
- mindestens drei Membran/Elektroden Baugruppen (31, 32, 33);
- mindestens eine erste und zweite bipolare Metallplatte (21, 22), welche zwischen die Membran/Elektroden Baugruppen eingefügt sind, wobei jede dieser bipolaren Platten zwei Metallfolien (41, 42) umfasst, die einer jeweiligen Membran/Elektroden Baugruppe gegenüber liegen und durch Schweißstellen (211, 221, 231) fest verbunden sind, wobei die beiden Metallfolien aufeinander folgenden Kanäle (412, 422) zum Führen von Gasen umfasst, welche sich gemäß einer gleichen Längsrichtung erstrecken, wobei die Führungskanäle gemäß einer Querrichtung verteilt sind, und wobei die Schweißstellen am Boden (413, 423) der Führungskanäle angebracht sind;
**dadurch gekennzeichnet, dass** zumindest ein Teil der Schweißstellen (211) der ersten bipolaren Platte nicht mit den Schweißstellen der zweiten bipolaren Platte überlagert ist und in Bezug auf die Schweißstellen (221) der zweiten bipolaren Platte in Längs- und Querrichtung versetzt ist.

2. Brennstoffzelle nach Anspruch 1, bei welcher die Schweißstellen (211) der ersten bipolaren Platte mit den Schweißstellen (221) der zweiten bipolaren Platte überhaupt nicht überlagert sind.

3. Brennstoffzelle nach Anspruch 1 oder 2, **dadurch gekennzeichnet, dass** die Projektionen der Schweißstellen der ersten und zweiten bipolaren Platte auf eine gleiche Ebene gemäß einer senkrechten Richtung zu diesen Platten mindestens 5mm, vorzugsweise mindestens 10mm, vorteilhafterweise mindestens 50mm entfernt sind.

4. Brennstoffzelle nach einem der vorhergehenden Ansprüche, bei welcher die Schweißstellen der ersten bipolaren Platte jeweils im Lot zum Schwerpunkt der Schweißstellen der zweiten bipolaren Platte, welche am dichtesten liegen, angeordnet sind.

5. Brennstoffzelle nach einem der Ansprüche 1 bis 3, umfassend darüber hinaus eine dritte bipolare Platte (23), wobei die zweite bipolare Platte (22) zwischen der ersten (21) und dritten bipolaren Platte angeordnet ist, wobei die dritte bipolare Platte zwei Metallfolien umfasst, welche durch Schweißstellen (231) fest verbunden sind, wobei die beiden Metallfolien aufeinander folgender Kanäle (412, 422) zum Führen Gase umfassen, welche sich gemäß einer gleichen Längsrichtung erstrecken, wobei die Führungskanäle gemäß einer Querrichtung verteilt sind und wobei die Schweißstellen (231) am Boden der Kanäle angebracht sind, wobei zumindest ein Teil der Schweißstellen der dritten bipolaren Platte in Bezug auf die Schweißstellen der zweiten bipolaren Platte in Längs- und Querrichtung versetzt ist, wobei die Schweißstellen der zweiten bipolaren Platte jeweils im Lot zum Schwerpunkt der der ersten und dritten bipolaren Platte angehörenden vier Schweißstellen, welche am dichtesten liegen, angeordnet sind.

6. Brennstoffzelle nach einem der vorhergehenden Ansprüche, bei welcher die Dichte von Schweißstellen der ersten und zweiten bipolaren Platte zwischen 0,1 und 1 Schweißstellen pro cm² liegt.

7. Brennstoffzelle nach einem der vorhergehenden Ansprüche, bei welcher die Schweißstellen der bipolaren Platten in homogener Weise auf den bipolaren Platten verteilt sind.

8. Brennstoffzelle nach einem der vorhergehenden Ansprüche, bei welcher die Metallfolien (41, 42) aus nichtrostendem Stahl gebildet sind.

9. Brennstoffzelle nach einem der vorhergehenden Ansprüche, bei welcher die Metallfolien (41, 42) einen Durchfluss-Kreislauf (43) einer Kühlflüssigkeit abgrenzen.

10. Brennstoffzelle nach einem der vorhergehenden Ansprüche, bei welcher die Schweißstellen punktuell oder linear sind.

## Claims

1. Fuel cell (1), comprising:
- at least three membrane/electrode assemblies (31, 32, 33);
- at least first and second metal bipolar plates (21, 22) interposed between said membrane/electrode assemblies, each of these bipolar plates comprising two metal sheets (41, 42) facing a respective membrane/electrode assembly and secured by welds (211, 221, 231), said two metal sheets comprising successive gas guiding channels (412, 422) extending in one and the same longitudinal direction, the guiding channels being distributed in a transverse direction, and the welds being formed in the bottom (413, 423) of the guiding channels;
**characterized in that** at least a part of said welds (211) of the first bipolar plate is not superposed on the welds of the second bipolar plate and is offset longitudinally and transversely relative to the welds (221) of the second bipolar plate.

2. Fuel cell according to Claim 1, in which the welds (211) of the first bipolar plate are not at all superposed on the welds (221) of the second bipolar plate.

3. Fuel cell according to Claim 1 or 2, **characterized in that** the projections of the welds of the first and second bipolar plates on one and the same plane in a direction at right angles to these plates are separated by at least 5 mm, preferably at least 10 mm and advantageously separated by less than 50 mm.

4. Fuel cell according to any one of the preceding claims, in which said welds of the first bipolar plate are each arranged vertically above the barycentre of the closest welds of the second bipolar plate.

5. Fuel cell according to any one of Claims 1 to 3, further comprising a third bipolar plate (23), the second bipolar plate (22) being arranged between the first (21) and third bipolar plates, the third bipolar plate comprising two metal sheets secured by welds (231), said two metal sheets comprising successive gas guiding channels (412, 422) extending in one and the same longitudinal direction, the guiding channels being distributed in a transverse direction, and the welds (231) being formed in the bottom of the guiding channels, at least a part of the welds of the third bipolar plate being offset longitudinally and transversally relative to the welds of the first and second bipolar plates, said welds of the second bipolar plate being each arranged vertically above the barycentre of the closest four welds belonging to the first or third bipolar plates.

6. Fuel cell according to any one of the preceding claims, in which the density of the welds of the first and second bipolar plates is between 0.1 and 1 weld per cm².

7. Fuel cell according to any one of the preceding claims, in which the welds of the bipolar plates are distributed uniformly over said bipolar plates.

8. Fuel cell according to any one of the preceding claims, in which said metal sheets (41, 42) are made of stainless steel.

9. Fuel cell according to any one of the preceding claims, in which said metal sheets (41, 42) delimit a coolant flow circuit (43).

10. Fuel cell according to any one of the preceding claims, in which said welds are spot or bead welds.
